(19) **Europäisches Patentamt / European Patent Office / Office européen des brevets**

(11) **EP 2 957 976 B1**

(12) **EUROPEAN PATENT SPECIFICATION**

(45) Date of publication and mention
of the grant of the patent:
**31.01.2018 Bulletin 2018/05**

(51) Int Cl.:
*G05D 1/10* *(2006.01)*     *B64C 39/10* *(2006.01)*
*B64D 5/00* *(2006.01)*

(21) Application number: **14461540.8**

(22) Date of filing: **20.06.2014**

(54) **Method and system for compensation of an asymmetric configuration of an all-wing carrier for flying units**

Verfahren und System zur Kompensation einer asymmetrischen Konfiguration eines Nurflügelträgers für Flugeinheiten

Procédé et système de compensation d'une configuration asymétrique d'un porteur toute voilure pour unités volantes

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.12.2015 Bulletin 2015/52**

(73) Proprietor: **Patents Factory Ltd. Sp. z o.o.**
**65-043 Zielona Gora (PL)**

(72) Inventors:
• **Paczkowski, Jacek**
**65-043 Zielona Gora (PL)**
• **Nalewa, Tomasz**
**65-043 Zielona Gora (PL)**
• **Kramek, Krzysztof**
**65-043 Zielona Gora (PL)**

(74) Representative: **Kancelaria Eupatent.pl Sp. z.o.o**
**Ul. Kilinskiego 185**
**90-348 Lodz (PL)**

(56) References cited:
**US-A- 5 810 284**     **US-A- 5 927 655**
**US-A1- 2009 294 573**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The object of the invention is a method and a system for compensation of an asymmetric configuration of an all-wing carrier for flying units.

BACKGROUND

There are known flying units of all-wing type. They usually resemble a single wing of an aircraft that comprises its own propelling means. Such flying units have several advantages, the main of which is a relatively low mass. This, in consequence, results in low fuel or energy consumption and low manufacturing costs when compared to classic flying units. The all-wing type units can be in form of UAVs (Unmanned Aerial Vehicles), which further emphasizes these advantages, and also eliminates the risk of death of the pilot.

The PCT application WO2001058756 discloses an aircraft of "all-wing" type, the flight of which can be controlled by controlling the thrust of its engines. Such steering method can allow for the lower overall mass of the aircraft, as well as less complicated construction.

There is also known a use of all-wing type units as a carrier for other, smaller UAVs with own propelling means. In such instance, these small UAVs are called 'parasites' and are connected for example to the lower surface of the carrier, so that they can be easily detached when necessary. When connected, they do not need to be propelled, as they rely on the carrier for transportation. Steering of a carrier with parasites is not different than steering of a carrier without parasites. However, this is a case only when there is a symmetric configuration of parasites with respect to the main axis of the carrier. When one or more of the parasites disconnect, configuration may change into an asymmetric one, posing therefore non-uniform drag resulting in an imbalance which may be hard to overcome through traditional steering means.

The US application US2009294573A1 discloses a system for reconnaissance using autonomous unmanned airborne vehicles (UAV). The system comprises a mothership, which is generally a fixed wing fuel tank capable of providing a suitable surface for flight (lift) and one or more elements for attachment of individual UAVs. The system further comprises one or more UAVs that are detachably connected to the mothership, and which are independently controllable for reconnaissance and tracking.

There is a need to provide a method and a system for compensation of an asymmetric configuration of an all-wing carrier for flying units that would not overly compromise its low energy or fuel consumption and structural simplicity.

SUMMARY

There is disclosed a method for compensating an asymmetric configuration of parasite flying units on an all-wing carrier aircraft, comprising the steps of: determining the non-compensated parasite ; reading the drag value of the non-compensated parasite ; selecting a parasite for effecting the compensation; producing a thrust on selected parasite to compensate the drag of the non-compensated parasite ;

Preferably, the method comprises selecting at least two parasites to effect the drag compensation.

Preferably, the drag value of the non-compensated parasite is determined using a gyroscope.

Preferably, the drag value of the non-compensated parasite is determined using tensometric sensors.

Preferably, the method comprises selecting, for effecting the compensation, the parasite that is the farthest from the axis of the plane.

There is also disclosed a system for compensating an asymmetric configuration of parasite flying units on an all-wing carrier aircraft, the system comprising a controller configured to: determine the non-compensated parasite ; read the drag value of the non-compensated parasite ; select a parasite for effecting the compensation; send a control signal to the selected parasite to produce a thrust on said selected parasite to compensate the drag of the non-compensated parasite.

BRIEF DESCRIPTION OF DRAWINGS

Further details and features of the present invention, its nature and various advantages will become more apparent from the following detailed description of the preferred embodiments shown in a drawing, in which:

Fig. 1 shows an all-wing flying unit in perspective view from above.
Fig. 2 shows an all-wing flying unit in perspective view from below.
Fig. 3 shows an all-wing flying unit in front view with all the parasites.
Fig. 4 shows an all-wing flying unit in front view with one parasite detached.
Figs. 5-7 show an all-wing flying unit in perspective view from below with one parasite detached.
Fig. 8 shows the steps of a method according to the invention.
Figure 9 shows a system according to the invention.

DETAILED DESCRIPTION

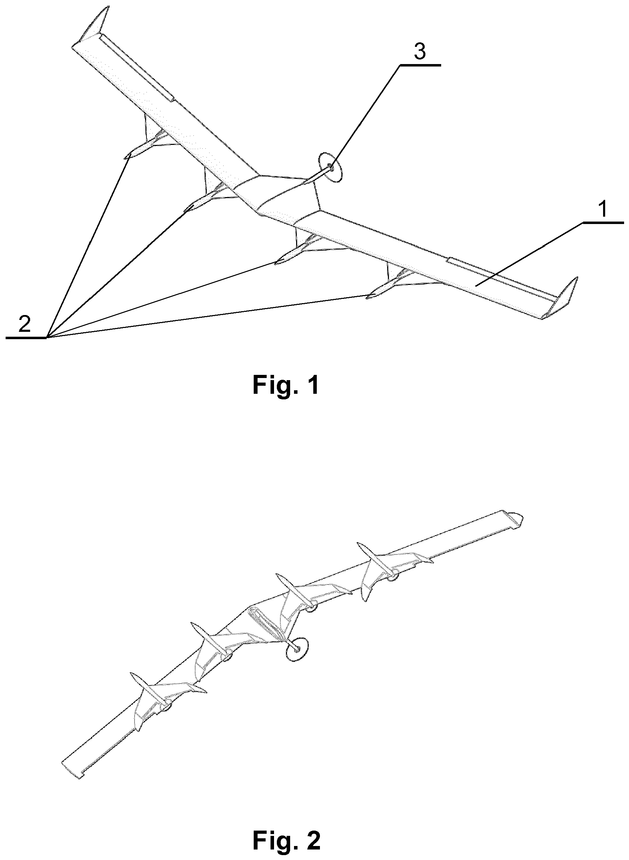

Figs. 1, 2 and 3 show an all-wing flying unit in perspective view from above, from below and in front view, respectively. The flying unit is propelled by a single engine 3 located in the center. The parasites (small UAVs) are connected under a wing 1 of the carrier, substantially in a symmetric configuration with respect to its longitudinal axis. In this case, there are two parasites on the left side and two parasites on the right side of the carrier. Such an arrangement results in a uniform drag distribution. Other configurations with different number of parasites are also possible.

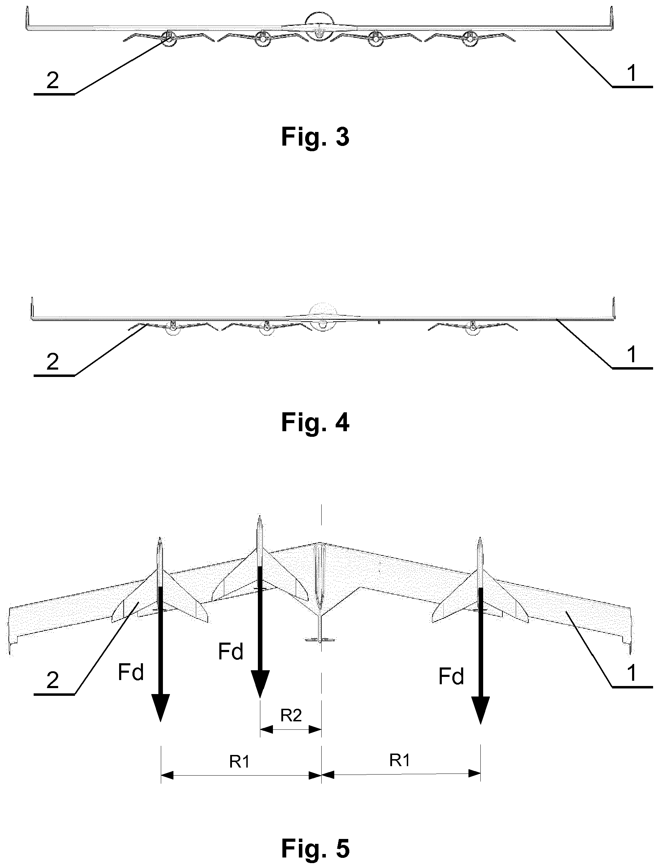

Figs. 4-7 show the same carrier wherein one of the parasites has been detached. There are therefore three parasites left, two on the right side and one on the left side. None of the parasites has an activated propelling means. Such asymmetric arrangement causes an non-uniform drag distribution of the carrier (less drag on the side from which parasite has been detached), which results with torque that is hard to compensate effectively only with the carrier's engine and/or rudder or ailerons.

The parasites are at the distance from the longitudinal axis of the carrier - two outer parasites are each at the distance R1, and the inner parasite is at the distance R2. As it can be seen, one of the inner parasites has been detached. There are also shown vectors of drag force acting on the parasites. The torque caused by the drag force of each parasite can be easily calculated, taking into account the distance R1 or R2 and the value of the drag force.

The asymmetric configuration of the parasites can be compensated by turning on the engine of one or more of them so as to produce a compensating thrust.

The parasites are connected to the carrier through electric connections so as to allow the carrier to send control signals to the parasites. The controller 21 in the carrier can turn on or off one or more engines of the parasites. It can also regulate the amount of the thrust produced by them. It is therefore possible to create the thrust such that it will compensate the non-uniform drag as stated above.

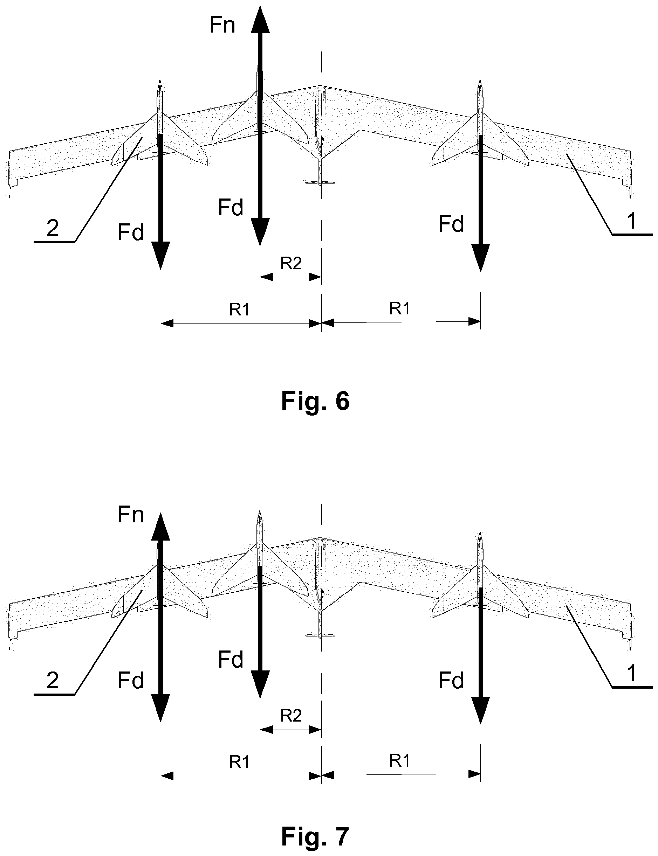

Assuming that one of the inner parasites 2 has been detached, as shown in Figs. 5 and 6, the drags generated by the outer parasites 2 are compensated by each other. On the other hand, the drag from the inner parasite 2 is not compensated. The controller 21 of the carrier can detect such a condition and send a control signal to the engine of the inner parasite 2 to produce a thrust that will be substantially equal to its drag, which in result will essentially neutralize its detrimental effect to the carriers lift-to-drag ratio.

In Fig. 7 there is shown a case where the controller 21 has sent a control signal to the outer parasite 2 instead of the inner parasite 2. The outer parasite 2 produces a thrust that can be calculated for example using the following formula:

$$Fn = \frac{R2}{R1} * Fd$$

wherein Fn is a thrust to be produced and Fd is the determined drag force caused by a parasite to be compensated.

In the situation where the outer parasite 2 is the one that has been detached first (not shown), the drag force of the remaining outer parasite 2 can be compensated either by producing the thrust on the said remaining outer parasite 2 with value essentially equal to its drag force, or by producing thrust on the inner parasite 2 (the one on the side on the remaining outer parasite) of value:

$$Fn = \frac{R1}{R2} * Fd$$

Such thrust would however result in larger energy consumption. It is be therefore preferable to release (detach) the inner parasites 2 first.

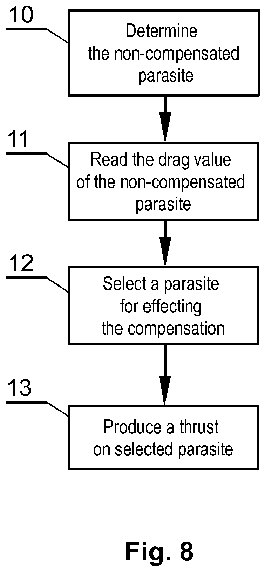

Figure 8 shows the steps of a method according to the invention. First, the parasite that is not compensated (due to detachment of its corresponding parasite from the other side of the aircraft) is determined in step 10. Next, the drag value of said non-compensated parasite is read 11, for example from its corresponding sensors. After that, in step 12, there is selected a parasite for effecting the compensation. It can be selected for example with the criterion of lowest energy consumption. It can be achieved through selecting the farthest located parasite (relative to the symmetry axis of the carrier) eligible for compensating. Finally, in step 13, the selected parasite (or parasites, as more than one can be selected for compensation) produces a thrust that will compensate the drag of the non-compensated parasite.

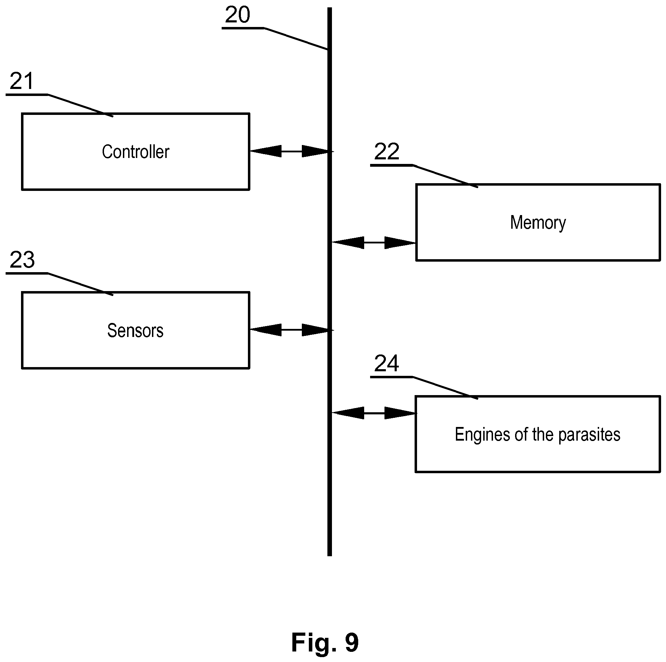

Figure 9 shows a system for compensation of an asymmetric configuration of an all-wing carrier for flying units. The system comprises a controller 21. The controller 21 is configured to execute software that allows for compensation of an asymmetric configuration using steps of the method described above. The system comprises a data bus 20 for communicating, preferably bidirectionally, all circuits and/or elements of the system. Further, the system comprises a memory 22 for storing required software for the controller 21 and any temporary data needed for operation of the system.

There are several ways to determine the value of thrust to be produced by the chosen parasite. One of them is the use of sensors 23, for example sensitive gyroscope sensors. The thrust in the engines 24 of the parasites should be generated so as to cause the gyroscope to indicate the value equal or close to 0 (in the longitudinal axis of the parasite). Other solution is to install tensometric sensors on the pylons and measure the force acting upon them. When the thrust of the parasite compensates its drag the tensometric sensors should indicate value equal or close to 0 (in the longitudinal axis of the parasite). Alternatively, the forces can be measured throughout the whole aircraft (on carrier alone or together with parasites). The controller 21 is communicatively connected to the engines 24 of the parasites so as to control their thrust based on the information provided from sensors 23.

The controller 21 can use a PID regulator to control the engine of selected parasite based on the measurement from the gyroscope sensor.

Alternatively, the controller 21 can use a PID controller 21 to control the engine of selected parasite based on the force set on the pylon and the force measured on the pylon.

An intelligent control implementing fuzzy logic can be utilized as well.

The method according to the invention can be utilized in pilotable manned or unmanned aircraft carriers carrying pilotable manned or unmanned parasite aircrafts. At least until the deployment of the parasites, the pilot of the carrier should have full control over the parasites, as stated above.

The method according to the invention can be utilized to compensate a malfunction of flight control surfaces of the carrier. In such case, the parasites either will support the maneuver effected by the carrier using its remaining, functioning flight control surfaces or the parasites will effect the maneuver alone.

The above described situation is different from the one where there is an aircraft comprising two or more engines, wherein one engine supports the other one in case of a failure. Normally, the planes are symmetric with respect to their longitudinal axis and maintain their aerodynamic configuration the whole time. However, carrying deployable, small aircrafts makes the asymmetric configuration inevitable. Such asymmetry ought to be compensated. In this solution, the parasites with their components are treated as integral parts of the system that can be utilized at will as long as they are connected, even though such state is only temporary. The compensation could be carried out by the pilot or the system using common means and techniques known in the art. This however would compromise the simplicity and weight of the carrier, which preferably should be as light and as simple construction-wise as possible after releasing most or all of the parasites. Another advantage of present invention is flexibility in terms of possible applications, as it can be easily utilized to compensate almost every configuration of parasites with respect to the carrier.

The above discussion is a simplification and idealization of flying, with the assumption of preferable, moderate flight conditions.

## Claims

1. A method for compensating an asymmetric configuration of parasite flying units on an all-wing carrier aircraft, **characterised in that** it comprises the steps of:

   - determining (10) the non-compensated parasite (2);
   - reading (11) the drag value of the non-compensated parasite (2);

   - selecting (12) a parasite for effecting the compensation;
   - producing (13) a thrust on selected parasite to compensate the drag of the non-compensated parasite (2).

2. The method according to claim 1, comprising selecting at least two parasites (2) to effect the drag compensation.

3. The method according to any of previous claims, wherein the drag value of the non-compensated parasite (2) is determined using a gyroscope.

4. The method according to any of previous claims, wherein the drag value of the non-compensated parasite (2) is determined using tensometric sensors.

5. The method according to any of previous claims, comprising selecting, for effecting the compensation, the parasite (2) that is the farthest from the axis of the plane.

6. A system for compensating an asymmetric configuration of parasite flying units on an all-wing carrier aircraft, the system comprising a controller (21) configured to:

   - determine the non-compensated parasite (2);
   - read the drag value of the non-compensated parasite (2);
   - select a parasite (2) for effecting the compensation;
   - send a control signal to the selected parasite to produce a thrust on said selected parasite (2) to compensate the drag of the non-compensated parasite (2).

## Patentansprüche

1. Verfahren zur Kompensation einer asymmetrischen Konfiguration von parasitären fliegenden Einheiten an einem Nurflügelträgerluftfahrzeug, **dadurch gekennzeichnet, dass** es die folgenden Schritte umfasst:

   - Bestimmen (10) des nicht kompensierten Parasiten (2);
   - Ablesen (11) des Zugwerts des nicht kompensierten Parasiten (2);
   - Auswählen (12) eines Parasiten, um die Kompensation zu bewirken;
   - Erzeugen (13) eines Schubs an dem ausgewählten Parasiten, um den Zug des nicht kompensierten Parasiten (2) zu kompensieren.

2. Verfahren nach Anspruch 1, umfassend das Auswählen von mindestens zwei Parasiten (2), um die Zugkompensation zu bewirken.

3. Verfahren nach einem der vorhergehenden Ansprüche, wobei der Zugwert des nicht kompensierten Parasiten (2) unter Verwendung eines Gyroskops bestimmt wird.

4. Verfahren nach einem der vorhergehenden Ansprüche, wobei der Zugwert des nicht kompensierten Parasiten (2) unter Verwendung von tensometrischen Sensoren bestimmt wird.

5. Verfahren nach einem der vorhergehenden Ansprüche, umfassend das Auswählen des Parasiten (2), der am weitesten von der Achse des Flugzeugs entfernt ist, um die Kompensation zu bewirken.

6. System zur Kompensation einer asymmetrischen Konfiguration von parasitären fliegenden Einheiten an einem Nurflügelträgerluftfahrzeug, wobei das System eine Steuerung (21) umfasst, die für Folgendes konfiguriert ist:

   - Bestimmen des nicht kompensierten Parasiten (2);
   - Ablesen des Zugwerts des nicht kompensierten Parasiten (2);
   - Auswählen eines Parasiten (2), um die Kompensation zu bewirken;
   - Senden eines Steuersignals an den ausgewählten Parasiten, um einen Schub an dem ausgewählten Parasiten (2) zu erzeugen, um den Zug des nicht kompensierten Parasiten (2) zu kompensieren.

**Revendications**

1. Procédé permettant de compenser une configuration asymétrique d'unités volantes parasites sur un aéronef porteur de type « aile volante «, **caractérisé en ce qu'**il comprend les étapes de :

   - détermination (10) du parasite (2) non compensé ;
   - lecture (11) de la valeur de traînée du parasite (2) non compensé ;
   - sélection (12) d'un parasite permettant d'effectuer la compensation ;
   - production (13) d'une poussée sur un parasite sélectionné pour compenser la traînée du parasite non compensé (2).

2. Procédé selon la revendication 1, comprenant la sélection d'au moins deux parasites (2) pour effectuer la compensation de traînée.

3. Procédé selon l'une quelconque des revendications précédentes, ladite valeur de traînée du parasite (2) non compensé étant déterminée à l'aide d'un gyroscope.

4. Procédé selon l'une quelconque des revendications précédentes, ladite valeur de traînée du parasite (2) non compensé étant déterminé à l'aide de tensiomètres.

5. Procédé selon l'une quelconque des revendications précédentes, comprenant la sélection, pour effectuer la compensation, du parasite (2) qui est le plus éloigné de l'axe de l'aéronef.

6. Système permettant de compenser une configuration asymétrique d'unités volantes parasites sur un aéronef porteur de type «aile volante», ledit système comprenant un dispositif de commande (21) conçu pour :

   - déterminer le parasite (2) non compensé ;
   - lire la valeur de traînée du parasite (2) non compensé ;
   - sélectionner un parasite (2) permettant d'effectuer la compensation ;
   - envoyer un signal de commande au parasite sélectionné pour produire une poussée sur ledit parasite (2) sélectionné afin de compenser la traînée du parasite (2) non compensé.

**Fig. 1**

**Fig. 2**

**Fig. 3**

**Fig. 4**

**Fig. 5**

Fn

Fd

2

Fd

Fd

R2

R1

R1

1

**Fig. 6**

Fn

Fd

2

Fd

Fd

R2

R1

R1

1

**Fig. 7**

10 — Determine
the non-compensated
parasite

11 — Read the drag value
of the non-compensated
parasite

12 — Select a parasite
for effecting
the compensation

13 — Produce a thrust
on selected parasite

**Fig. 8**

**Fig. 9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2001058756 A

- US 2009294573 A1